# EUROPÄISCHE PATENTANMELDUNG

(11) **EP 0 669 514 A1**
(43) Veröffentlichungstag der Anmeldung: **30.08.1995**
(21) Anmeldenummer: 95100527.1
(22) Anmeldetag: 17.01.1995
(51) Int. Cl.: G01B 3/00, B23Q 16/00

(54) **Messvorrichtung**

(30) Priorität: 24.01.1994 DE 4401777
(71) Anmelder: WIDIA HEINLEIN GMBH, 91586 Lichtenau (DE)
(72) Erfinder: Grimm, Michael, Dipl.-Ing., D-09246 Pleissa (DE); Höng, Peter, D-90613 Grosshabersdorf (DE); Eischer, Alexander, Dipl.-Ing., D-91595 Burgoberbach (DE)
(74) Vertreter: Schieferdecker, Lutz, Dipl.-Ing.

(57) **Zusammenfassung**

Die Erfindung betrifft eine Meßvorrichtung, inbesondere für Zerspanwerkzeuge, mit einem Meßtaster, der an einer Taststange angeordnet und in beiden Richtungen (A, B) von mindestens einer Achse (X) mit Hilfe einer Führungseinrichtung bewegbar gelagert ist, und mit mindestens einem, dem Meßtaster zugeordneten Meßwertaufnehmer.

Der Kern der Erfindung besteht darin, daß ein Mitnehmer 7 mit dem geführten Meßtaster 2 starr verbunden ist, daß mindestens ein starr angeordneter, die Null-Lage des Meßtasters 2 definierender Anschlag 8,9 vorgesehen ist und daß mindestens ein dem Mitnehmer 7 zugeordnetes, bewegbar gelagertes Druckstück 10,11 vorgesehen ist, das von dem Druck eines Strömungsmediums mittelbar oder unmittelbar beaufschlagt ist.

## Beschreibung

Die Erfindung betrifft eine insbesondere für Zerspanwerkzeuge bestimmte Meßvorrichtung mit einem Meßtaster, der an einer Taststange angeordnet und in beiden Richtungen A und B von mindestens einer Achse X mit Hilfe einer Führungseinrichtung bewegbar gelagert ist, und mit mindestens einem, dem Meßtaster zugeordneten Meßwertaufnehmer.

Meßvorrichtungen der genannten Art sind grundsätzlich bekannt. Sie werden z.B. bei der Bestimmung der Lage von Schneideinsätzen auf Werkzeugen wie z.B. auf Fräswerkzeugen oder Drehräumwerkzeugen verwendet. Mit ihrer Hilfe wird die genaue Lage der Schneideinsätze auf dem Werkzeugträger nach dem Bestücken bestimmt und sodann werden mögliche Fehler korrigiert. Hierzu ist es erforderlich, daß der an der Taststange befindliche Meßtaster in beiden Richtungen einer vorgegebenen Achse an den jeweiligen Meßpunkt heranbewegt werden kann, wobei ferner ein Problem bei den bekannten Meßvorrichtungen insofern besteht, als die Meßkraft abhängig vom Meßweg ist.

Der Erfindung liegt daher die Aufgabe zugrunde, eine Meßvorrichtung der hier interessierenden Art so zu gestalten, daß die Meßkraft unabhängig vom Meßweg ist.

Zur Lösung dieser Aufgabe sieht die Erfindung vor, daß ein Mitnehmer mit dem geführten Meßtaster starr verbunden ist, daß mindestens ein starr angeordneter, die Null-Lage des Meßtasters definierender Anschlag vorgesehen ist und daß mindestens ein, dem Mitnehmer zugeordnetes, bewegbar gelagertes Druckstück vorgesehen ist, das mittelbar oder unmittelbar von dem Druck eines Strömungsmediums beaufschlagt ist.

Gemäß einer bevorzugten Ausführungsform sind zwei Anschläge vorgesehen und im Abstand voneinander starr angeordnet und ferner sind zwei jeweils mit Druck beaufschlagte Druckstücke vorgesehen und an entgegengesetzten Seiten der Anschläge angeordnet, während der Mitnehmer in der Null-Lage sich zwischen den Anschlägen befindet. Dies hat im Ergebnis zur Folge, daß bei exakter Fixierung der Null-Lage keine von außen wirksame Kraft am Meßtaster angreift, daß ferner die Meßkraft im Gegensatz zu Meßvorrichtungen mit Federn unabhängig vom Meßweg ist und schließlich, daß überhaupt eine absolut exakte Null-Lageneinstellung möglich ist.

Weitere Merkmale der Erfindung gehen aus Unteransprüchen in Verbindung mit der Beschreibung und der Zeichnung hervor.

Die Erfindung wird nachstehend anhand von zwei Ausführungsbeispielen, die in der Zeichnung dargestellt sind, näher beschrieben. Dabei zeigen:
Fig. 1: eine Prinzipskizze der Meßvorrichtung mit zwei Druckstücken und zwei miteinander verbundenen, geregelten Kolben-Zylindereinrichtungen und
Fig. 2: eine Prinzipskizze ähnlich der in Fig. 1 von einer abgewandelten Meßvorrichtung mit zur Erzeugung des Anpreßdruckes der Druckstücke dienenden Membranen.

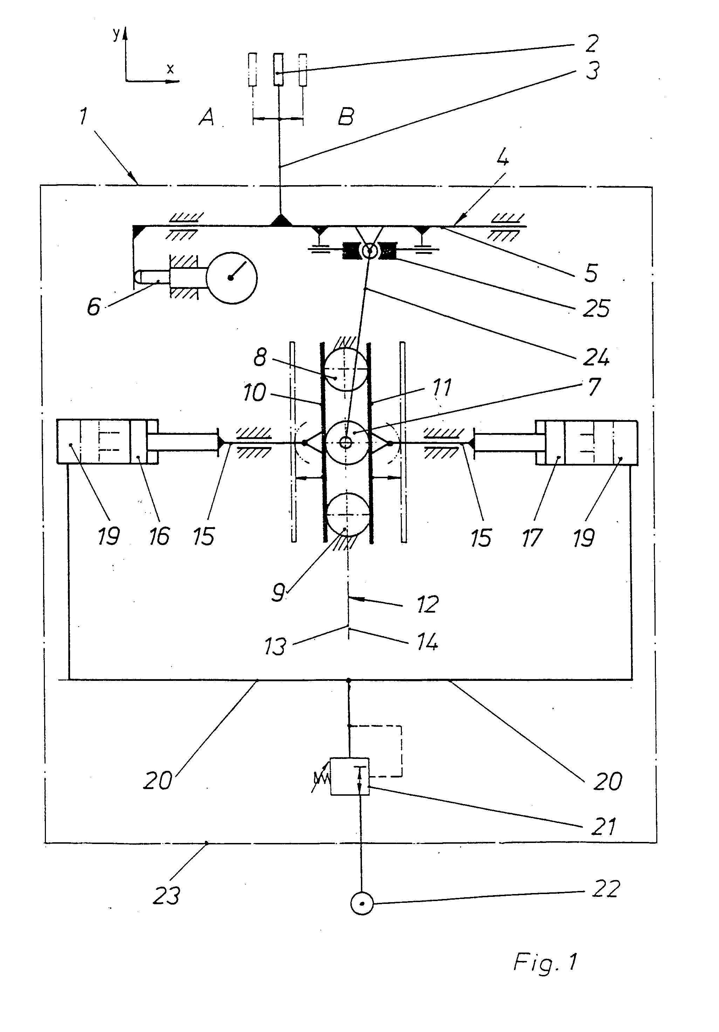

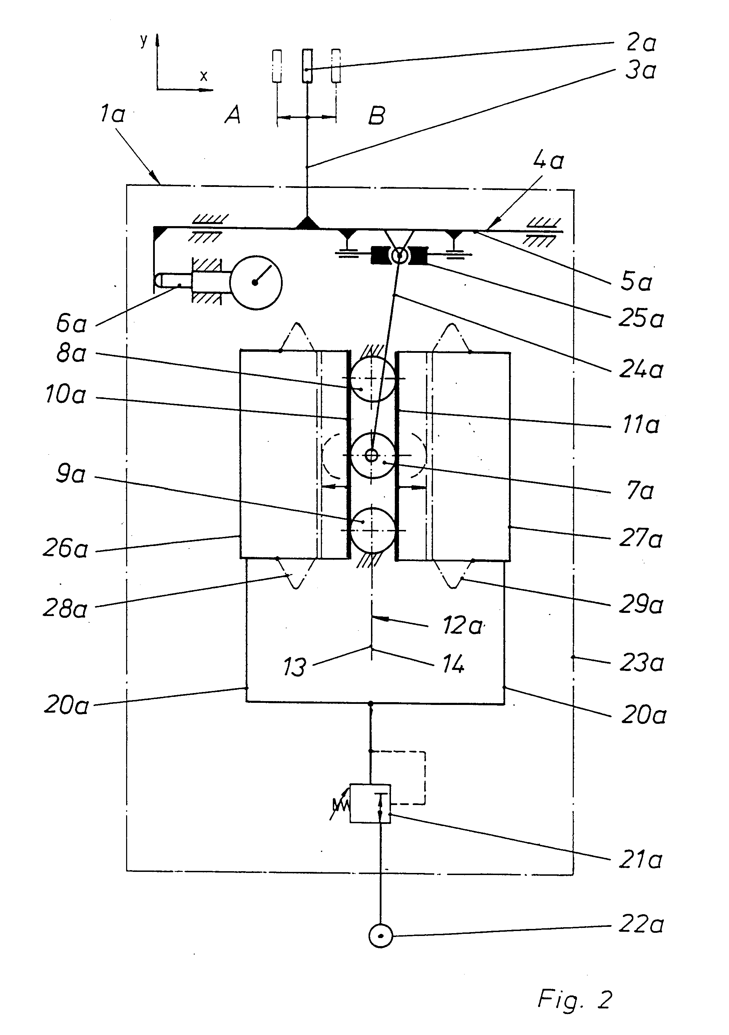

Eine Vorrichtung 1 zum Bestimmen und Messen - nachfolgend kurz Meßvorrichtung 1 genannt - zum Bestimmen und Messen der Lage eines Meßpunktes in einem mindestens zweidimensionalen Koordinatensystem mit den Achsen X und Y umfaßt einen Meßtaster 2, der an einer Taststange 3 angeordnet ist und mit den in den Figuren 1 und 2 dargestellten Merkmalen mindestens in den beiden Richtungen A und B in Richtung der X-Achse mit Hilfe einer Führungseinrichtung 4 bewegbar gelagert ist. Bei der Führungseinrichtung 4 handelt es sich um grundsätzlich bekannte Komponenten einer Meßvorrichtung 1, wozu auch eine in geeigneter Weise gelagerte und in Richtung der X-Achse verschiebbare Führungsstange 5 gehört.

Die Taststange 3 ist gemäß den in den Figuren dargestellten Ausführungsbeispielen unmittelbar an der Führungsstange 5 befestigt.

Ferner ist mindestens ein Meßwertaufnehmer 6 dem Meßtaster 2 unmittelbar oder mittelbar zugeordnet.

Wie aus der Prinzipskizze von Fig. 1 hervorgeht, ist ein Mitnehmer 7 mit dem geführten Meßtaster 2 verbunden. Diese Verbindung ist starr, auch wenn sie gemäß Ausführungsbeispiel nicht unmittelbar, sondern nur mittelbar besteht.

Ferner ist mindestens ein starr angeordneter, die Null-Lage des Meßtasters 2 definierender Anschlag 8 vorgesehen. Gemäß dem in Fig. 1 dargestellten Ausführungsbeispiel wird von zwei Anschlägen 8 und 9 Gebrauch gemacht, wobei diese Anschläge im Abstand voneinander angeordnet sind und der Mitnehmer 7 im Falle der Null-Lage des Meßtasters 2 unmittelbar zwischen den beiden Anschlägen 8, 9 steht.

Schließlich ist mindestens ein bewegbar gelagertes Druckstück 10 vorgesehen, das dem Mitnehmer 7 und auch dem bzw. den Anschlägen 8, 9 zugeordnet ist. Gemäß Ausführungsbeispiel wird von zwei Druckstücken 10 und 11 Gebrauch gemacht.

Die beiden im Abstand voneinander angeordneten Anschläge 8 und 9 stehen in einer Ebene 12, die sich quer zur Bewegungsrichtung des Meßtasters 2 bzw. quer zur X-Achse erstreckt. Die beiden Druckstücke 10 und 11 befinden sich jeweils auf entgegengesetzten bzw. einander gegenüberliegenden Seiten 13 und 14 der Ebene 12 und liegen in der Null-Lage jeweils lose an den Anschlägen 8, 9 an, wobei sich ferner der Mitnehmer 7 zwischen ihnen befindet.

Die Druckstücke 10, 11 sind durch den Druck eines Strömungsmediums beaufschlagt.

Bei dem in Fig. 1 dargestellten Ausführungsbeispiel sind die beiden Druckstücke 10, 11 mittelbar von einem Strömungsmedium mit Druck beaufschlagt, da sich die Druckstücke 10, 11 an Stangen 15 befinden, die wiederum mit Kolben-Zylindereinrichtungen 16, 17 verbunden sind. Die Stangen 15 sind in geeigneter Weise geführt, wie aus Fig. 1 hervorgeht.

Der von den Kolben-Zylindereinrichtungen 16, 17 auf die Druckstücke 10, 11 ausgeübte Druck ist geregelt. Hierzu sind die Zylinderkammern 19 der beiden Kolben-Zyindereinrichtungen 16, 17 über Leitungen 20 gemeinsam mit einem Ventil 21 und einer Druckquelle 22 verbunden. Das Ventil 21 ist vorzugsweise ein Druckregelventil und bei dem Strömungsmedium handelt es sich vorzugsweise um Luft.

Gemäß dem in Fig. 1 dargestellten Ausführungsbeispiel handelt es sich bei den Anschlägen 8, 9 um in einem die verschiedenen Komponenten aufnehmenden Gehäuse 23 fest und starr angeordnete Bolzen und auch der Mitnehmer 7 ist ein, allerdings beweglich angeordneter Bolzen.

Der bolzenförmige Mitnehmer 7 ist gemäß Ausführungsbeispiel einerseits starr und andererseits relativ zum Meßtaster 2 einstellbar. Dazu ist er mit Hilfe eines Zwischenstückes 24 und eines Verstell- und Fixierelementes 25 an der Führungsstange 5 angeordnet und somit in definierter Lage zur Taststange 3 und zum Meßtaster 2 fixiert.

Die im Gehäuse 23 befestigten, bolzenförmigen Anschläge 8 und 9 und der bolzenförmige Mitnehmer 7 haben denselben Durchmesser, so daß die Druckstücke 10 und 11 in der Null-Lage gemäß Fig. 1 mit einem Druck bzw. einer Kraft entsprechend dem Druck des Strömungsmediums lose an dem Mitnehmer 7 und an den Anschlägen 8, 9 anliegen.

Sobald der Meßtaster 2 bei einem Meßvorgang z.B. in Richtung des Pfeiles A in Fig. 1 seine Lage verändert, bewegt sich der Mitnehmer 7 synchron in derselben Richtung und verschiebt das Druckstück 10 parallel zu dem Pfeil A. Der von dem Strömungsmedium im Bereich der Kolben-Zylindereinrichtung 16 herrschende Druck bleibt aufgrund des angeschlossenen Ventiles 21 konstant. Das andere Druckstück 11 bleibt während dessen unverändert in Anlage an den beiden Anschlägen 8 und 9 bei ebenfalls gleichbleibendem Druck des Strömungsmediums.

Bei einer Bewegung des Meßtasters 2 in Richtung des Pfeiles B bleibt das Druckstück 10 an den Anschlägen 8, 9 stehen, während der Mitnehmer 7 das Druckstück 11 verschiebt. Die Null-Lage des Meßtasters 2 wird in beiden Fällen, das heißt nach einer Bewegung in Richtung des Pfeiles A bzw. in Richtung des Pfeiles B jeweils mit Hilfe der den Mitnehmer 7 in seine Null-Lage zwischen den Anschlägen 8, 9 bewegenden Kolben-Zylindereinrichtungen 16 und 17 erzielt. Hierbei ist ferner bedeutsam, daß jedes Druckstück 10 bzw. 11 den Mitnehmer 7 nur bis in die die Null-Lage definierende Ebene 12 zurückbewegen können. Eine darüber hinausgehende Bewegung auf die jeweils andere Seite 13 oder 14 ist wegen der Anschläge 8, 9 nicht möglich. Die Anschläge 8, 9, der mit dem Meßtaster 2 starr verbundene Mitnehmer 7 und die mit gleichem Druck wirkenden Druckstücke 10, 11 ermöglichen daher eine genaue Bestimmung der Null-Lage und ein Messen mit konstanter Meßkraft unabhängig vom Meßweg.

Es versteht sich schließlich, daß als Strömungsmedium auch eine Hydraulikflüssigkeit anstelle von Luft dienen kann.

Bei dem in Fig. 2 dargestellten Ausführungsbeispiel bezeichnen übereinstimmende Bezugszahlen dieselben Teile und weisen zusätzlich den Buchstabenindex a auf.

Gemäß Fig. 2 ist die Anordnung der verschiedenen Teile zueinander geringfügig anders und ferner sind Druckeinrichtungen 26a und 27a anstelle der Kolben-Zylindereinrichtungen vorgesehen und weisen jeweils eine Membran 28a bzw. 29a auf, so daß der Druck des Strömungsmedlums die Druckstücke 10a und 11 a unmittelbar beaufschlagt.

Im übrigen sind die Funktion und Wirkungsweise der Vorrichtung 1 gemäß Fig. 2 identisch gleich wie im Falle der Vorrichtung 1 gemäß Fig. 1, wobei in Fig. 2 zusätzlich strichpunktiert die Lage des Meßtasters 2a beim Bewegen in Richtung des Pfeiles A bzw. B und die entsprechende Verformung der Membranen 28a bzw. 29a zusätzlich zu ihrer Stellung in der Null-Lage dargestellt sind.

Es versteht sich schließlich, daß die Vorrichtung 1 bzw. die Vorrichtung 1 mit Hilfe nicht dargestellter Baukomponenten in Richtung der Y-Achse und auch gegebenenfalls in Richtung einer zu der XY-Ebene senkrechten Z-Achse in geeigneter Weise verstellbar sein können, wenn dies im Einzelfall notwendig ist. Die Erfindung ist daher nicht auf die in den Figuren dargestellten Merkmale beschränkt, vielmehr sind auch noch Ergänzungen und Abwandlungen möglich, ohne von dem grundsätzlichen Erfindungsgedanken abzuweichen.

## Patentansprüche

1. Meßvorrichtung, insbesondere für Zerspanwerkzeuge, mit einem Meßtaster (2, 2a), der an einer Taststange (3, 3a) angeordnet und in beiden Richtungen (A, B) von mindestens einer Achse (X) mit Hilfe einer Führungseinrichtung (4, 4a) bewegbar gelagert ist, und mit mindestens einem, dem Meßtaster (2, 2a) zugeordneten Meßwertaufnehmer (6, 6a), dadurch gekennzeichnet, daß
a. ein Mitnehmer (7, 7a) mit dem geführten Meßtaster (2, 2a) starr verbunden ist,
b. daß mindestens ein starr angeordneter, die Null-Lage des Meßtasters (2, 2a) definierender Anschlag (8, 9 bzw. 8a, 9a) vorgesehen ist und
c. daß mindestens ein dem Mitnehmer (7, 7a) zugeordnetes, bewegbar gelagertes Druckstück (10, 11 bzw. 10a, 11 a) vorgesehen ist,
d. das von dem Druck eines Strömungsmediums beaufschlagt ist.

2. Meßvorrichtung nach Anspruch 1, dadurch gekennzeichnet, daß der Druck des Strömungsmediums geregelt ist.

3. Meßvorrichtung nach einem oder mehreren der vorhergehenden Ansprüche, dadurch gekennzeichnet, daß das Strömungsmedium Luft ist.

4. Meßvorrichtung nach einem oder mehreren der vorhergehenden Ansprüche, dadurch gekennzeichnet, daß zwei Anschläge (8, 9 bzw. 8a, 9a) vorgesehen und im Abstand voneinander starr angeordnet sind.

5. Meßvorrichtung nach einem oder mehreren der vorhergehenden Ansprüche, dadurch gekennzeichnet, daß der Mitnehmer (7, 7a) zwischen den Anschlägen (8, 9 bzw. 8a, 9a) sowie quer zu deren Ebene (12, 12a) bewegbar angeordnet ist.

6. Meßvorrichtung nach einem oder mehreren der vorhergehenden Ansprüche, dadurch gekennzeichnet, daß jeweils zwei mit Druck beaufschlagte Druckstücke (10, 11 bzw. 10a, 11a) vorgesehen sind.

7. Meßvorrichtung nach einem oder mehreren der vorhergehenden Ansprüche, dadurch gekennzeichnet, daß die Druckstücke (10, 11 bzw. 10a, 11 a) an entgegengesetzten Seiten (13, 14 bzw. 13a, 14a) der Anschläge (8, 9 bzw. 8a, 9a) angeordnet sind.

8. Meßvorrichtung nach einem oder mehreren der vorhergehenden Ansprüche, dadurch gekennzeichnet, daß der Mitnehmer (7, 7a) lose an dem jeweils einen oder anderen Druckstück (10, 11 bzw. 10a, 11 a) anliegt.

9. Meßvorrichtung nach einem oder mehreren der vorhergehenden Ansprüche, dadurch gekennzeichnet, daß Bolzen (X ) als Anschläge (10, 11 bzw. 10a, 11 a) vorgesehen sind.

10. Meßvorrichtung nach einem oder mehreren der vorhergehenden Ansprüche, dadurch gekennzeichnet, daß jeweils ein Druckstück (10 bzw. 11; 10a bzw. 11 a) für eine Bewegungsrichtung (A oder B) vorgesehen ist.

11. Meßvorrichtung nach einem oder mehreren der vorhergehenden Ansprüche, dadurch gekennzeichnet, daß das Druckstück (10, 11 bzw. 10a, 11a) plattenförmig/stabförmig ist.

12. Meßvorrichtung nach einem oder mehreren der vorhergehenden Ansprüche, dadurch gekennzeichnet, daß eine Kolben-Zylindereinrichtung (16, 17) zum Beaufschlagen des Druckstückes (10, 11) vorgesehen ist.

13. Meßvorrichtung nach einem oder mehreren der vorhergehenden Ansprüche, dadurch gekennzeichnet, daß eine Membran (28a, 29a) zum Beaufschlagen des Druckstückes (10a, 11a) vorgesehen ist.
